# FASCICULE DE BREVET EUROPEEN

(11) **EP 2 098 756 B1**
(45) Date de publication et mention de la délivrance du brevet: **22.12.2010**
(21) Numéro de dépôt: 09152735.8
(22) Date de dépôt: 12.02.2009
(51) Int. Cl.: F16H 45/02, F16F 15/14

(54) **Dispositif d'amortissement comportant un système d'amortissement des vibrations formé par un batteur inertiel**
Dämpfungsvorrichtung, die ein Schwingungsdämpfungssystem umfasst, das aus einer Trägheitstrommel besteht
Shock-absorbing device including a system for absorbing vibrations formed by an inertia beater

(30) Priorité: 04.03.2008 FR 0851410
(43) Date de publication de la demande: 09.09.2009
(73) Titulaire: Valeo Embrayages, 80009 Amiens (FR)
(72) Inventeur: Verhoog, Roel, 60190, GOURNAY SUR ARONDE (FR); Renier, Lionel, 80670, CANAPLES (FR); Mahe, Hervé, 80000, AMIENS (FR); Fafet, Olivier, 80120 Quend Plage (FR); Graton, Michel, 75020, PARIS (FR)
(74) Mandataire: Lemaire, Marc

(56) Documents cités:
- DE-A1- 10 236 752
- US-A- 3 259 222
- US-A- 5 062 517

## Description

La présente invention concerne un dispositif d'amortissement comportant un système d'amortissement des vibrations formé par un batteur inertiel.

La présente invention concerne plus particulièrement un dispositif d'amortissement comportant un amortisseur principal qui comporte au moins des organes élastiques à action circonférentielle interposés entre des rondelles de guidage et un voile qui est lié en rotation aux rondelles de guidage avec une capacité de débattement angulaire limitée par des moyens de butée, et comportant un système d'amortissement des vibrations, dit batteur inertiel, qui comporte au moins une masse d'inertie reliée au voile de l'amortisseur par des moyens élastiques.

Un tel dispositif d'amortissement équipe généralement une transmission de véhicule automobile dans laquelle il est associé à un embrayage, humide ou à sec, qui est apte à relier sélectivement le moteur à la boîte de vitesses.

Dans une transmission, le dispositif d'amortissement est destiné à filtrer les acyclismes du moteur et les bruits grâce à un amortisseur, avantageusement associé à un batteur inertiel. Le batteur inertiel est destiné à filtrer les vibrations, plus particulièrement à filtrer sélectivement les vibrations à au moins une fréquence déterminée, en particulier une fréquence de résonance donnée du moteur.

Un tel dispositif d'amortissement comportant un amortisseur conventionnel et un batteur inertiel est notamment, mais non exclusivement, susceptible d'être mis en oeuvre dans un appareil d'accouplement hydrocinétique.

Le document DE-A1-102.36.752 décrit et représente, notamment à la figure 8, un exemple d'un dispositif d'amortissement pour un appareil d'accouplement hydrocinétique comportant un embrayage de verrouillage ou « lock-up » de type multi-disques.

Le dispositif d'amortissement comporte respectivement un amortisseur et un système d'amortissement des vibrations formé par un batteur inertiel au sens de la présente invention.

Le batteur inertiel comporte principalement une masse d'inertie qui est liée en rotation au voile de l'amortisseur par l'intermédiaire de moyens élastiques constitués par de la matière élastomère.

L'utilisation de tels moyens élastiques n'est cependant pas entièrement satisfaisante,

En effet, l'encombrement général d'un tel batteur est particulièrement importante, notamment axialement en raison du fait que le batteur n'est pas intégré au dispositif d'amortissement mais est agencé axialement à côté de l'amortisseur au voile duquel il est relié.

De plus, le choix de la matière élastomère est d'une part en partie déterminé par des contraintes externes telles que la bonne tenue physico-chimique de la matière dans l'huile dont est remplie le carter et, d'autre part, une telle matière élastomère présente en fonctionnement des phénomènes d'hystérésis importants susceptibles d'être préjudiciable à la filtration des vibrations.

Le but de la présente invention est de remédier notamment aux inconvénients précités de l'état de la technique et de proposer un système d'amortissement des vibrations muni de moyens élastiques qui soit de faible encombrement tout en étant simple, fiable et peu coûteux.

Dans ce but, l'invention propose un dispositif d'amortissement du type décrit précédemment, caractérisé en ce que les moyens élastiques du batteur sont constitués par au moins une languette élastique dont une extrémité est reliée à la masse d'inertie et dont l'autre extrémité est reliée au voile de l'amortisseur.

Avantageusement, les languettes élastiques selon l'invention sont réalisées en métal, en particulier en acier - tel qu'un acier XC70 - dont le choix est d'une manière générale déterminé en fonction des propriétés élastiques désirées.

Par comparaison avec la matière élastomère du batteur équipant l'appareil d'accouplement hydrocinétique selon l'état de la technique précité, les languettes élastiques sont inertes dans l'huile de sorte que les problèmes de vieillissement et les risques de pollution sont par exemple avantageusement supprimés.

L'utilisation de languettes selon l'invention comme moyens élastiques pour le batteur autorise une grande liberté de conception, en particulier une intégration du batteur à l'amortisseur permettant d'obtenir au final un dispositif d'amortissement particulièrement compact, notamment d'encombrement tant axial que radial réduit.

Avantageusement, les languettes élastiques selon l'invention permettent de réaliser un système d'amortissement des vibrations présentant une excellente tenue mécanique à la centrifugation et qui, particulièrement précis, est apte à filtrer sélectivement au moins une fréquence déterminée, par exemple une fréquence de résonance.

Selon d'autres caractéristiques de l'invention :
- les moyens élastiques comportent une première extrémité qui est liée, directement ou par l'intermédiaire d'au moins une première pièce de liaison, à la masse d'inertie et une deuxième extrémité qui est liée, directement ou par l'intermédiaire d'au moins une seconde pièce de liaison, au voile de l'amortisseur ;
- au moins une extrémité des moyens élastiques est conformée pour permettre une fixation directe des moyens élastiques avec respectivement la masse d'inertie ou le voile de manière que les moyens élastiques comportent à l'une et/ou l'autre de leurs extrémités une partie de fixation qui, venue de matière, est réalisée en une seule pièce ;
- la masse d'inertie et/ou le voile comportent une partie de fixation qui, venue de matière, est réalisée en une seule pièce avec la masse ou le voile de manière à permettre une fixation directe de l'une des extrémités des moyens élastiques ;
- les moyens élastiques comportent au moins un élément élastique formé par un groupe comprenant un nombre n de languettes élastiques superposées les unes aux autres, le nombre n de languettes étant de préférence compris entre 1 et 12 ;
- les moyens élastiques comportent un nombre N d'éléments élastiques qui, au moins égal à deux, sont répartis circonférentiellement de manière régulière par rapport à la masse d'inertie et au voile de l'amortisseur ;
- les moyens élastiques comportent au moins un élément élastique formé par au moins une languette, dite monobloc, qui est réalisée en une seule pièce, venue de matière, avec la masse d'inertie du batteur ;
- chaque languette monobloc est réalisée par découpe de la masse d'inertie et chaque languette monobloc s'étend circonférentiellement en étant comprise axialement et radialement dans l'épaisseur de la masse d'inertie ;
- le batteur comporte des moyens de butée aptes à limiter axialement et/ou radialement les débattements des moyens élastiques par rapport à la masse d'inertie et/ou au voile, afin notamment de limiter les efforts sollicitant les moyens élastiques ;
- le système d'amortissement des vibrations formé par le batteur inertiel est apte à permettre une correction des balourds, en particulier par une adjonction ou par un retrait de matière opéré localement sur la masse d'inertie.

D'autres caractéristiques et avantages de l'invention apparaîtront à la lecture de la description détaillée qui suit pour la compréhension de laquelle on se reportera aux dessins annexés dans lesquels :
- la figure 1 est une demi-vue en coupe axiale qui représente un dispositif d'amortissement équipant un appareil d'accouplement hydrocinétique et qui illustre un premier mode de réalisation du système d'amortissement ou batteur inertiel à languettes élastiques selon l'invention ;
- la figure 2 est une vue en perspective, avec éclaté, qui représente le dispositif d'amortissement selon la figure 1 et qui illustre, avant assemblage, le premier mode de réalisation du batteur ;
- la figure 3 est une vue en perspective, avec arrachement local, qui représente, après assemblage, le dispositif d'amortissement selon les figures 1 et 2 et qui illustre notamment les languettes élastiques du batteur selon le premier mode de réalisation ;
- la figure 4 est une vue de côté qui représente partiellement un batteur selon l'invention et qui illustre en détail une variante de réalisation des languettes élastiques du batteur ;
- la figure 5 est une vue similaire à la figure 4 qui illustre une autre variante de réalisation des languettes élastiques du batteur ;

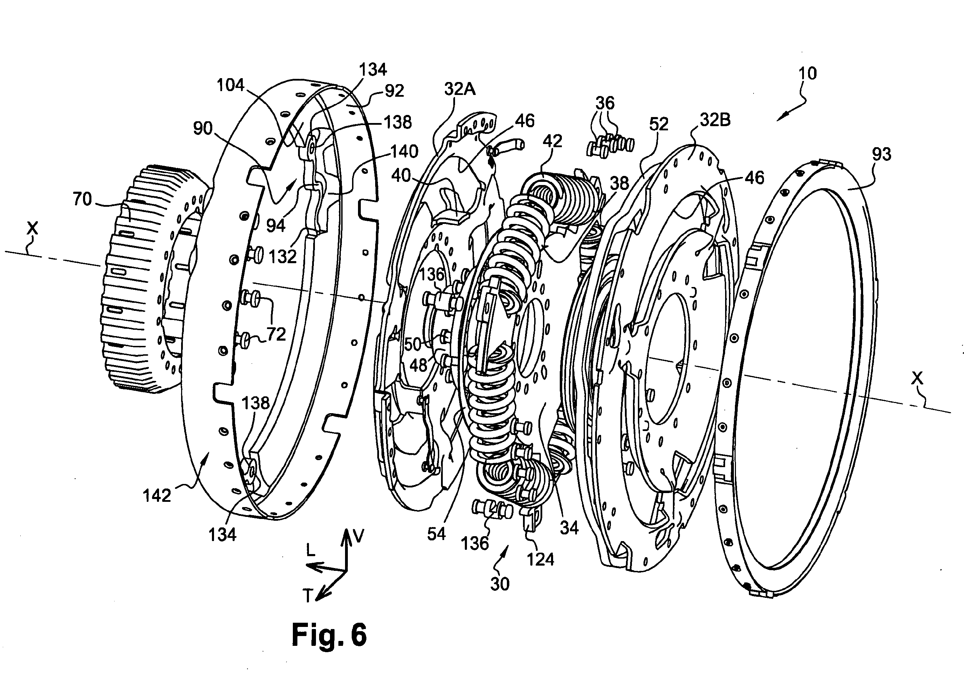

- la figure 6 est une vue en perspective, avec éclaté, qui représente un dispositif d'amortissement et qui illustre un deuxième mode de réalisation du batteur ;

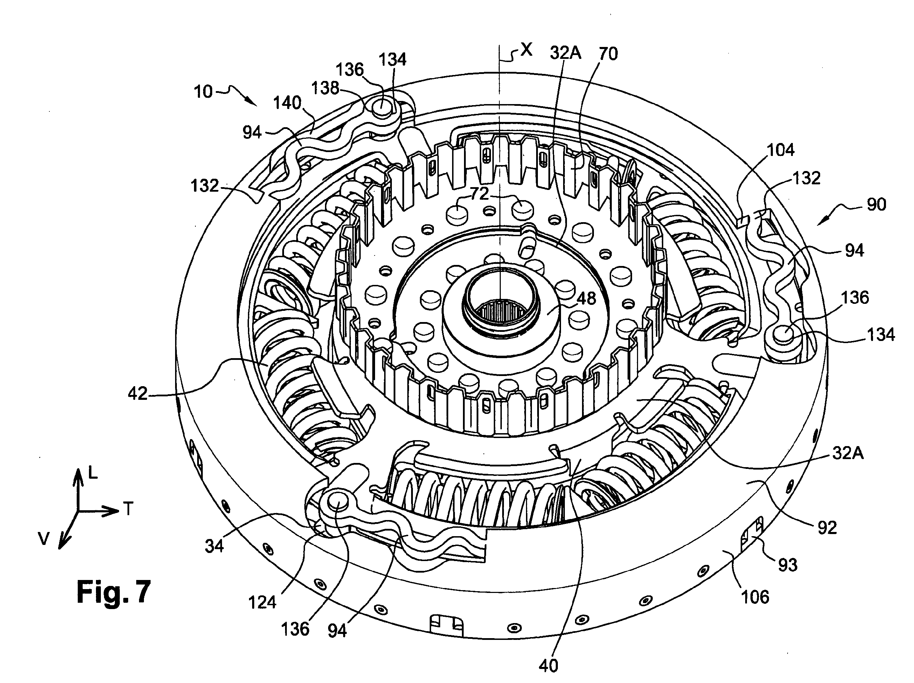

- la figure 7 est une vue en perspective qui représente, après assemblage, le batteur selon la figure 6 et qui illustre en détail la languette élastique réalisée en une seule pièce avec la masse d'inertie.

Dans la description et les revendications, on utilisera à titre non limitatif et afin d'en faciliter la compréhension, les termes « avant » ou « arrière », « extérieur » ou « intérieur », etc. ainsi que les orientations « axial » ou « radial » pour désigner des éléments selon les définitions données dans la description et par rapport au trièdre (L, V, T) représenté sur les figures.

Dans la description, les éléments identiques, similaires ou analogues seront désignés par les mêmes chiffres de référence.

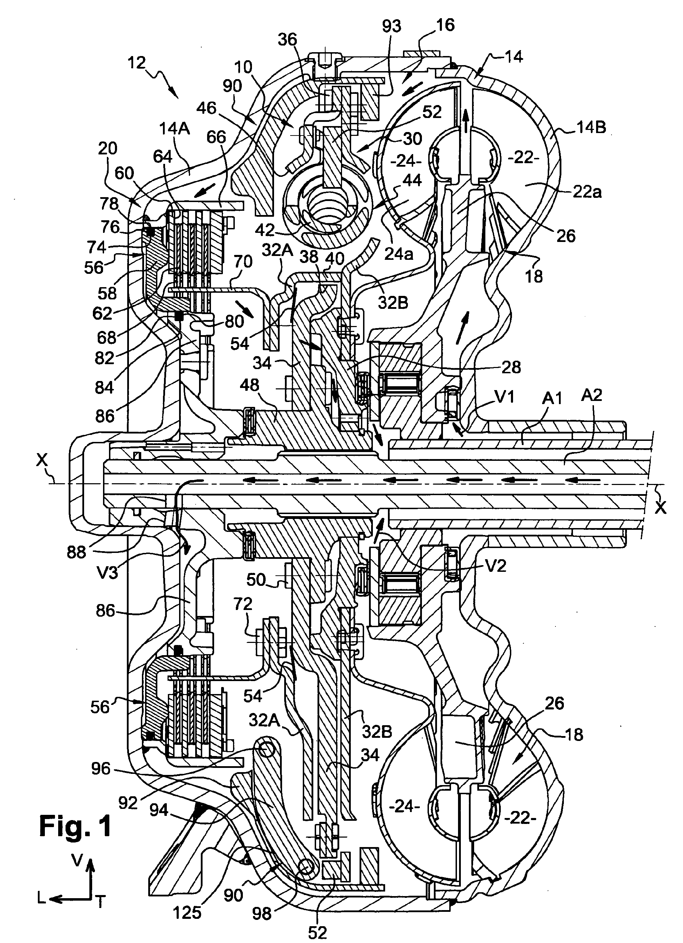

On a représenté à la figure 1, un dispositif d'amortissement 10 selon l'invention équipant un appareil d'accouplement hydrocinétique 12 et présentant un axe X-X commun de rotation.

L'appareil d'accouplement hydrocinétique 12 ne constitue qu'un exemple d'application possible, non limitatif, du type de transmission ou d'embrayage susceptible de comporter un dispositif d'amortissement 10 selon l'invention.

Les orientations « avant » et « arrière » correspondent respectivement à la gauche et à la droite de la figure 1 suivant l'axe de rotation X-X de l'appareil qui, s'étendant longitudinalement, détermine l'orientation « axiale » par opposition à l'orientation « radiale » qui lui est orthogonale et qui s'étend verticalement selon le trièdre (L, V, T).

Les termes « extérieur » et « intérieur » sont utilisés pour définir la position relative d'un élément par rapport à un autre, par référence à l'axe principal X-X, un élément proche de l'axe est ainsi qualifié d'intérieur par comparaison à un élément extérieur situé radialement en périphérie.

L'appareil d'accouplement hydrocinétique 12 comporte un carter étanche 14 formé respectivement d'une partie avant 14A et d'une partie arrière 14B, globalement en forme de coquilles qui sont assemblées par soudage.

Les parties arrière 14B et avant 14A du carter 14 délimitent un volume général 16 de l'appareil 12 à l'intérieur duquel sont principalement agencés un convertisseur de couple 18 et un embrayage de verrouillage 20, entre lesquels est interposé axialement le dispositif d'amortissement 10.

Le convertisseur de couple 18 comporte une roue d'impulseur arrière 22, une roue de turbine avant 24 et, de préférence, une roue de réaction centrale 26.

La roue d'impulseur 22 comporte des aubes 22a qui sont portées par la partie arrière 14B de carter, laquelle est solidaire en rotation de l'autre partie avant 14A du carter 14.

La partie arrière 14B est apte à être liée en rotation à un arbre menant A1. La roue de turbine 24 comporte aussi des aubes 24a qui font face axialement aux aubes 22a de la roue d'impulseur 22.

La roue de turbine 24 est liée en rotation à un arbre mené A2, coaxial à l'axe principal X-X de l'appareil 12, ici par l'intermédiaire d'un moyeu de turbine 28.

Dans le cas d'une application à un véhicule automobile, l'arbre menant A1 est constitué par le vilebrequin du moteur à combustion interne du véhicule, tandis que l'arbre mené A2 est constitué par l'arbre d'entrée de la transmission du véhicule, conventionnellement relié à des moyens de changement de rapport de vitesse.

Le dispositif d'amortissement 10 comporte un amortisseur 30, dit principal, comportant un élément d'entrée constitué par des rondelles de guidage, respectivement une rondelle de guidage avant 32A et une rondelle de guidage arrière 32B.

La roue de turbine 24 est ici solidaire en rotation d'une part de la rondelle de guidage arrière 32B par une liaison sans jeu, de préférence réalisée par rivetage en variante par soudage, et d'autre part, du moyeu de turbine 28 auquel la rondelle de guidage arrière 32B est liée par engrènement.

L'amortisseur principal 30 du dispositif d'amortissement 10 comporte encore un élément de sortie constitué par au moins un voile 34.

En variante, l'élément d'entrée de l'amortisseur 30 est constitué par le voile 34 et les rondelles de guidage 32A, 32B en constituent alors l'élément de sortie.

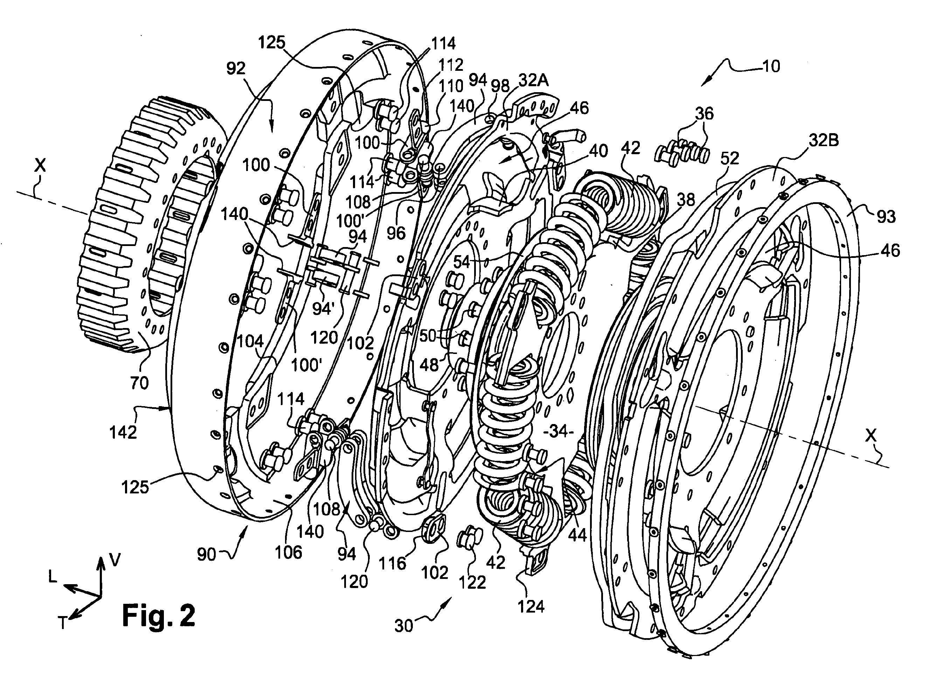

Les rondelles de guidage 32A, 32B sont solidaires en rotation l'une de l'autre par leurs bords périphériques extérieurs, par exemple au moyen de rivets 36 (voir figure 2).

Le voile 34 de l'amortisseur 30 comporte des encoches 38 de butée, qui sont prévues chacune pour permettre le débattement angulaire d'au moins une patte axiale 40 associée que comporte la rondelle de guidage avant 32A.

Chaque encoche 38 comporte deux bords radiaux opposés circonférentiellement qui forment des surfaces de butée pour la patte axiale 40 associée, l'ensemble formant des moyens de butées de l'amortisseur 30.

La venue en butée des pattes 40 contre les surfaces de butée détermine donc une position angulaire relative, dite de butée, entre les rondelles de guidage 32A, 32B et le voile 34.

Avantageusement, les pattes 40 de la rondelle de guidage avant 32A assurent encore une fonction d'entretoise et participent au positionnement axial des pièces de l'amortisseur 30, en particulier du voile 34 par rapport aux rondelles de guidage 32A, 32B.

Le couple transmis par la roue de turbine 24 est directement transmis aux rondelles de guidage 32A, 32B, formant l'élément d'entrée de l'amortisseur 30, puis au voile 34, formant l'élément de sortie de l'amortisseur 30, par l'intermédiaire d'organes élastiques 42 à action circonférentielle.

Le débattement angulaire des rondelles de guidage 32A, 32B par rapport au voile 34 à l'encontre des organes élastiques 42 est donné par les moyens de butée 38, 40 qui déterminent la position angulaire de butée.

Les organes élastiques 42 à action circonférentielle sont interposés entre les rondelles de guidage 32A, 32B et le voile 34. Pour ce faire, le voile 34 comporte des fenêtres 44 dans lesquelles sont montés les organes élastiques 42.

Les rondelles de guidage 32A, 32B comprennent chacune une partie centrale de guidage qui est munie de fenêtres 46 agencées axialement au droit des fenêtres 44 du voile.

Les organes élastiques 42 sont en appui respectivement sur les bords radiaux des fenêtres 46 des rondelles de guidage 32A, 32B et sur les bords radiaux des fenêtres 44 du voile 34. Les organes élastiques 42 sont maintenus axialement par des bords d'orientation circonférentielle des fenêtres 46 des rondelles de guidage 32A, 32B.

Les organes élastiques 42 sont sollicités circonférentiellement entre les rondelles de guidage 32A, 32B et le voile 34 de l'amortisseur 30, dans la mesure d'un débattement angulaire relatif déterminé par le déplacement circonférentiel des pattes axiales 40 de la rondelle de guidage avant 32A dans les encoches 38 du voile 34, jusqu'à la position angulaire de butée.

Le voile 34 est solidaire en rotation d'un moyeu de sortie 48, ici par des rivets 50, en variante par engrènement sans jeu, le moyeu de sortie 48 étant lié en rotation avec l'arbre mené A2, par exemple par l'intermédiaire de cannelures.

En variante (non représentée), le voile 34 formant l'élément de sortie de l'amortisseur 30 est réalisé en une seule pièce, monobloc, avec le moyeu de sortie 48.

De préférence, l'amortisseur 30 comporte différents organes élastiques 42 à action circonférentielle qui sont reliés par l'intermédiaire d'une rondelle, dite de phasage, 52 qui assure la continuité de la transmission du couple transmis, par l'intermédiaire des organes 42, des rondelles de guidage 32A, 32B formant l'élément d'entrée au voile 34 formant l'élément de sortie.

Avantageusement, l'amortisseur 30 comporte au moins une rondelle élastique 54 qui est ici agencée axialement entre la rondelle de guidage avant 32A et le voile 34, la rondelle élastique 54 à effet axial étant par exemple une rondelle tronconique qui est circonférentiellement en appui de manière continue sur chaque face radiale en vis-à-vis, du voile 34 et de la rondelle de guidage avant 32A respectivement.

La rondelle élastique 54 participe au bon positionnement axial des rondelles de guidage 32A, 32B et du voile 34. En variante non représentée, l'amortisseur 30 comporte une rondelle de frottement, dite d'hystérésis.

L'appareil d'accouplement hydrocinétique 12 comporte, à l'avant, une chambre étanche 56, qui est délimitée axialement par une portion radiale de la face arrière de la partie avant 14A du carter 14 et par un piston 58.

Le piston 58 est mobile axialement de manière à pouvoir venir serrer axialement, sous l'action de la pression de l'huile dans la chambre 56, l'embrayage de verrouillage 20, qui est dans l'exemple de réalisation représenté sur la figure 1 un embrayage de type multi-disques.

En variante, l'appareil d'accouplement hydrocinétique 12 comporte un embrayage de verrouillage 20, encore appelé « lock-up », de type monoface ou encore de type bi-faces.

L'embrayage de verrouillage 20 comporte une pluralité de flasques 60 et des disques de friction 62 qui sont interposés axialement entre deux flasques 60 successifs, chaque disque de friction 62 étant avantageusement pourvu sur ses faces avant et arrière de garnitures de friction.

Les flasques 60 comportent, à leur périphérie radiale extérieure, une denture 64 ou tout autre moyen propre à lier en rotation par coopération de formes les flasques 60 à une première pièce de liaison 66.

La première pièce de liaison 66 est solidaire en rotation de la partie avant 14A du carter 14 sur la face arrière de laquelle elle est rapportée à fixation par soudage.

Les disques 62 comportent, de manière analogue aux flasques 60, des moyens d'engrènement 68 qui, agencés à la périphérie radiale intérieure de chaque disque 62, assurent la liaison en rotation avec une deuxième pièce de liaison 70.

La deuxième pièce de liaison 70 est solidaire en rotation de l'entrée de l'amortisseur 30, ici par l'intermédiaire de la rondelle de guidage avant 32A.

La deuxième pièce de liaison 70 présente globalement, en coupe, une forme en « L » comportant respectivement une branche axiale dont la face supérieure cannelée coopère par engrènement avec les dents 68 de chacun des disques de friction 62 et une branche radiale qui, s'étendant à partir de l'extrémité axiale arrière de la branche axiale, est fixée sur la face avant de la rondelle de guidage avant 32A, par exemple par l'intermédiaire de rivets 72, en variante par soudage.

Le piston 58 comporte, à sa périphérie radiale extérieure, une gorge annulaire 74 dans laquelle sont montés des premiers moyens 76 d'étanchéité dynamique, tels qu'un segment, qui coopèrent avec une surface annulaire 78 en vis-à-vis appartenant ici à la première pièce de liaison 66.

Le piston 58 comporte, à sa périphérie radiale intérieure, une surface annulaire 80 propre à coopérer avec des seconds moyens 82 d'étanchéité dynamique, tels qu'un segment, qui sont montés dans une gorge annulaire 84 d'un moyeu 86, ou centreur, qu'entoure le piston 58, avec lequel il est lié en rotation par exemple par engrènement.

Les moyens d'étanchéité 76, 82 délimitent ainsi la chambre avant 56, qui est alimentée en huile par un arbre creux, ici l'arbre mené A2, des passages radiaux 88 adaptés étant prévus dans l'arbre A2 et dans le moyeu ou centreur 86.

L'appareil d'accouplement hydrocinétique 12 est du type « trois voies », c'est à dire qu'il comprend une première voie V1 d'alimentation du circuit hydraulique du convertisseur 18 et une seconde voie V2 de sortie, ainsi qu'une troisième voie d'alimentation V3 de la chambre 56 pour déplacer axialement le piston 58, ladite troisième voie V3 étant indépendante des première V1 et seconde V2 voies du convertisseur 18.

On rappellera succinctement le fonctionnement de l'appareil d'accouplement hydrocinétique 12.

Dans une première phase de fonctionnement, dite « phase convertisseur », le couple de l'arbre menant A1 est transmis à la roue d'impulseur 22 qui entraîne, par circulation d'huile entre les aubes 22a et 24a, la roue de turbine 24.

Durant cette phase convertisseur, le dispositif d'amortissement 10 et plus particulièrement l'amortisseur 30 n'intervient pratiquement pas dans l'amortissement des vibrations ou oscillations de torsion dues principalement aux acyclismes du moteur (non représenté) comportant l'appareil 12.

En effet, les vibrations ou oscillations de torsion sont filtrées dans l'huile par le convertisseur 18 puisque la transmission du couple moteur est réalisée par l'intermédiaire de l'énergie cinétique de l'huile dans le convertisseur 18, l'amortisseur 30 n'intervenant que pour transmettre le couple de la roue de turbine 24 au moyeu de sortie 48 lié à l'arbre mené A2.

Dans une seconde phase, dite « phase de couplage », on alimente la chambre étanche 56 de manière à déplacer - sous l'action de la pression de l'huile - le piston 58 axialement de l'avant vers l'arrière.

Le piston 58 exerce alors une pression axiale vers l'arrière qui est propre à serrer axialement les unes contre les autres les surfaces de frottement portées respectivement par les flasques 60 et les disques de friction 62 de l'embrayage 20 de manière à coupler les arbres menant A1 et mené A2.

L'embrayage 20 est généralement commandé après le démarrage du véhicule et après le couplage hydraulique des arbres menant A1 et mené A2, pour éviter la perte de rendement induite notamment par les phénomènes de glissement se produisant entre les roues d'impulseur 22 et de turbine 24.

Lors de la phase de couplage correspondant à l'état embrayé, c'est-à-dire lorsque le piston 58 vient serrer axialement les disques de friction 62 de l'embrayage 20, le couple de l'arbre menant A1 est transmis d'abord aux rondelles de guidage, en particulier la rondelle de guidage avant 32A qui est liée à la deuxième pièce de liaison 70, puis au voile 34 par l'intermédiaire des organes élastiques 42.

Or, cette transmission du couple s'accompagne inéluctablement d'une transmission des vibrations et des oscillations de torsion à travers les différents éléments de cette chaîne cinématique.

Les organes élastiques 42 amortissent tout ou partie des oscillations de torsion, puis après débattement angulaire de la liaison à jeu entre les rondelles de guidage 32A, 32B et le voile 34 et intervention des moyens de butée 38 et 40 de l'amortisseur 30, le couple est transmis par le voile 34 à l'arbre mené A2, par l'intermédiaire du moyeu 48.

Le dispositif d'amortissement 10 doit avantageusement permettre une filtration efficace de toutes les vibrations ou oscillations de torsion de manière à éviter leurs transmissions à l'arbre mené A2.

C'est la raison pour laquelle, le dispositif d'amortissement 10 comporte, outre l'amortisseur principal 30, un système d'amortissement 90 des vibrations, désigné ci-après « batteur inertiel », qui est destiné à filtrer les vibrations à au moins une fréquence déterminée, telle qu'une fréquence de résonance donnée d'une valeur de 110 Hz.

Le batteur inertiel 90 formant le système d'amortissement des vibrations comporte au moins une masse d'inertie 92 qui est reliée au voile 34 de l'amortisseur 30 par des moyens élastiques 94.

Conformément à l'invention, les moyens élastiques du batteur 90 sont constitués par au moins une languette élastique 94 dont une première extrémité 96 est reliée à la masse d'inertie 92 et dont une deuxième extrémité 98 est reliée au voile 34 de l'amortisseur 30.

Avantageusement, les moyens élastiques 94 du batteur inertiel 90 comportent un nombre « N » de moyens élastiques qui, au moins égal à deux, sont répartis circonférentiellement de manière régulière par rapport à la masse d'inertie 92 et au voile 34 de l'amortisseur 30.

Les moyens élastiques 94 comportent chacun une première extrémité 96 qui est liée, directement ou par l'intermédiaire d'au moins une première pièce de liaison 100, à la masse d'inertie 92 et une deuxième extrémité 98 qui est liée, directement ou par l'intermédiaire d'au moins une seconde pièce de liaison 102, au voile 34 de l'amortisseur 30.

Les moyens élastiques 94 sont reliés indirectement au voile 34, soit du fait de l'interposition d'une deuxième pièce de liaison, soit du fait que la deuxième extrémité 98 est liée, directement ou non, à une autre pièce qui est liée au voile 34, telle que par exemple le moyeu 48.

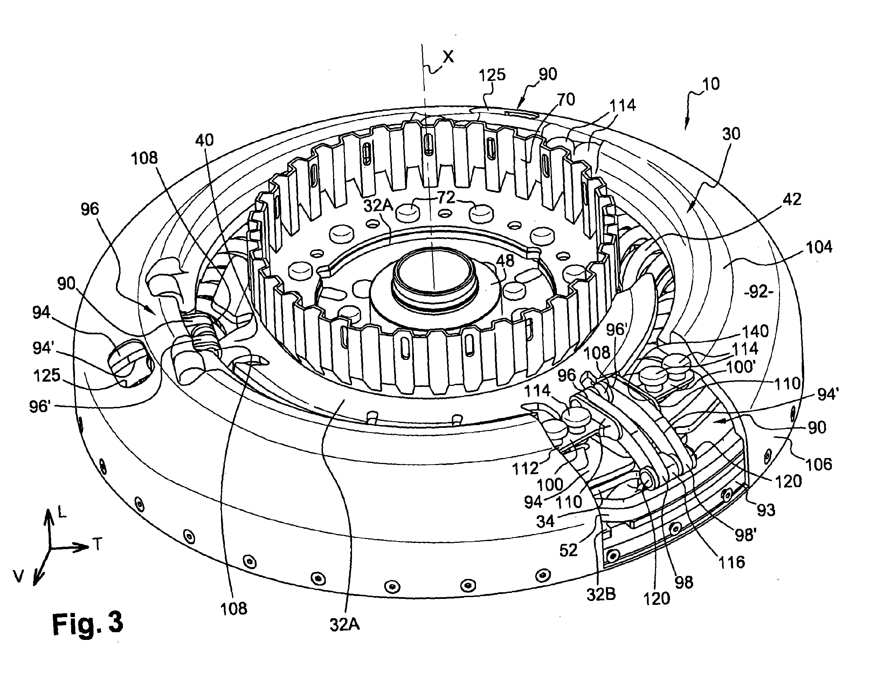

On décrira maintenant un premier mode de réalisation de l'invention qui est plus particulièrement illustré aux figures 1 à 3.

De préférence, le batteur 90 comporte un nombre « N » de moyens élastiques 94 qui est égal à trois, les trois moyens élastiques 94 étant répartis circonférentiellement de manière régulière autour de l'axe X-X, soit à 120° les uns des autres.

Avantageusement, chacun des N moyens élastiques 94 est dans ce premier mode constitués par deux éléments élastiques 94 appariés, respectivement un premier élément élastique 94 et un deuxième élément élastique 94', chaque élément élastique 94 et 94' étant formé par un groupe de « n » languettes élastiques.

De préférence, le nombre « n » de languettes élastiques de chaque élément 94, 94' est compris entre 1 et 12, par exemple égal à 4 ou 6 en fonction des applications.

Le premier élément élastique 94 comporte une première extrémité 96 qui est liée par l'intermédiaire d'au moins une première pièce de liaison 100 à la masse d'inertie 92 et une deuxième extrémité 98 qui est liée par l'intermédiaire d'au moins une seconde pièce de liaison 102 au voile 34 de l'amortisseur 30.

Le deuxième élément élastique 94' est analogue au premier élément élastique 94 et comporte une première extrémité 96' qui est liée par l'intermédiaire d'au moins une autre première pièce de liaison 100' à la masse d'inertie 92 et une deuxième extrémité 98' qui est liée par l'intermédiaire d'au moins une seconde pièce de liaison 102 au voile 34 de l'amortisseur 30.

Avantageusement, les éléments élastiques 94 et 94' ont chacun une première pièce de liaison associée, respectivement 100 et 100', mais la seconde pièce de liaison 102 est commune aux deux éléments élastiques 94 et 94'.

La masse d'inertie 92 est par exemple une pièce globalement annulaire qui présente, en coupe axiale, une forme générale en « L » de sorte que la masse 92 comporte principalement une partie intérieure 104 qui, d'orientation radiale, se raccorde par un coude à une partie extérieure 106 d'orientation axiale.

La partie axiale 106 de la masse 92 entoure la périphérie externe de l'amortisseur 30 tandis que l'autre partie radiale 104 s'étend verticalement depuis la partie axiale 106 jusqu'aux organes élastiques 42 environ.

La partie axiale 106 de la masse 92 est agencée axialement en avant de l'amortisseur 30, c'est à dire dans l'espace axial compris entre l'amortisseur 30 et l'embrayage de verrouillage 20.

Avantageusement, une masse supplémentaire 93 en forme de couronne est susceptible d'être rapportée à fixation, par exemple par rivetage, sur l'extrémité arrière de la partie axiale de la masse d'inertie 92.

Une telle masse supplémentaire 93 est susceptible d'être utilisée pour modifier la masse d'inertie du batteur 90 pour lui conférer une valeur donnée en fonction de l'application, notamment du type de moteur.

Avantageusement, la masse 92 ainsi que, le cas échéant, la masse supplémentaire 93, sont discontinues, c'est à dire réalisées en plusieurs parties et non pas en une seule pièce annulaire continue.

La masse d'inertie est par exemple réalisée sous la forme d'au moins trois masses 92 distinctes et qui, globalement en arc de cercle, sont chacune respectivement associées à l'un des N moyens élastiques du batteur 90 dans le cas où N est égal à trois.

Comme illustré sur la figure 2, le batteur 90 comporte au moins des premiers moyens de fixation 108 qui, constitués ici par des rivets, sont destinés à fixer les extrémités intérieures 96 et 96' de chacun des moyens élastiques 94, 94' avec respectivement une partie d'accrochage de la première pièce de liaison 100 et 100' associée.

Les première et seconde pièces de liaison 100, 100', 102 sont ici des pièces distinctes des moyens élastiques 94, 94', la seconde pièce de liaison 102 étant avantageusement commune aux moyens élastiques 94 et 94', les extrémités extérieures 98 et 98' de chacune y sont reliées.

Chaque première pièce de liaison 100 et 100' présente globalement une forme en « T » dont la barre verticale 110, ici orientée radialement, comporte ladite partie d'accrochage avec les extrémités intérieures 96 et 96' des moyens élastiques 94 et 94' respectivement et dont la barre horizontale 112 forme une autre partie d'accrochage des pièces de liaison 100 et 100' avec la masse d'inertie 92.

La fixation de ladite partie d'accrochage des premières pièces de liaison 100 et 100' sur la masse d'inertie 92 est réalisée par l'intermédiaire de seconds moyens de fixation 114 qui sont, de préférence, constitués par des rivets.

De manière analogue, la deuxième pièce de liaison 102 comporte deux parties d'accrochage, à savoir une partie avant 116 destinée à permettre la fixation des extrémités extérieures 98 et 98' des éléments élastiques 94 et 94' et une partie arrière 118 destinée à être fixée solidairement au voile 34.

La fixation entre la partie avant 116 de la deuxième pièce de liaison 102 avec chacune des extrémités extérieures 98, 98' des éléments élastiques 94, 94' est réalisée par l'intermédiaire de troisièmes moyens de fixation 120 tandis que la fixation de la partie arrière 118 avec le voile 34 est réalisée par l'intermédiaire de quatrièmes moyens de fixation 122.

Avantageusement, le voile 34 comporte entre deux fenêtres 44 consécutives une partie qui s'étend radialement vers l'extérieur, à l'extrémité de laquelle est disposée une partie de fixation 124 destinée à recevoir pour sa fixation la partie arrière 118 de la deuxième pièce de liaison 102.

De préférence, les troisièmes et quatrièmes moyens de fixation 120 et 122 associés à la deuxième pièce de liaison 102 sont constitués par des rivets, chaque rivet de fixation 120 commun aux éléments élastiques 94, 94' est muni centralement d'un épaulement annulaire.

Avantageusement, toutes les pièces 94, 94', 100, 100', 102, 92 du batteur 90 et le voile 34 qui sont assemblées par rivetage comportent des perçages pour permettre le passage des fûts des rivets correspondants, généralement constitués d'une paire de rivets pour les seconds et quatrièmes moyens de fixation 114 et 122.

Les éléments élastiques 94 et 94' appariés s'étendent radialement globalement de manière curviligne depuis les extrémités intérieures 96 et 96' jusqu'aux extrémités extérieures opposées 98 et 98' de manière à suivre et épouser globalement la forme de la masse d'inertie 92.

En variante, les éléments élastiques 94 et 94' appariés ou non s'étendent radialement globalement de manière rectiligne depuis les extrémités intérieures 96 et 96' jusqu'aux extrémités extérieures opposées 98 et 98'.

En variante, les pièces de liaison 100, 100' et 102 sont par exemple supprimées de manière que chacune des extrémités 96 ou 96' et 98 ou 98' des éléments élastiques 94 et 94' soient reliées directement à la masse d'inertie 92 et au voile 34, respectivement.

Avantageusement, grâce à l'agencement des languettes formant les moyens élastiques 94 et 94', le dispositif d'amortissement 10 forme un sous-ensemble compact qui, constitué de l'amortisseur 30 et du batteur 90, présente un encombrement total, tant radialement qu'axialement, globalement équivalent à l'encombrement général d'un dispositif d'amortissement 10 conventionnel dépourvu de batteur 90.

Avantageusement, les moyens élastiques 94, 94' du batteur inertiel 90 selon l'invention s'étendent, d'une part, axialement entre le voile 34 et la partie d'orientation radiale de la masse d'inertie 92 adjacente et, d'autre part, radialement à l'intérieur d'une partie axiale de la masse d'inertie 92 de manière que les moyens élastiques 94, 94' soient intégrés pour former un sous-ensemble constitué de l'amortisseur et du batteur qui, compact tant radialement qu'axialement, présente un encombrement général réduit.

De préférence, la masse d'inertie 92 comporte des ouvertures 125 destinées à permettre un accès depuis l'extérieur du dispositif d'amortissement 10 afin de réaliser les opérations de fixation des pièces du batteur 90 par rivetage.

Bien entendu, l'invention n'est nullement limitée au premier mode de réalisation préféré qui vient d'être décrit dès lors que de nombreuses variantes de réalisation des moyens élastiques 94 du batteur 90 formés par au moins une languette élastique sont possibles, ainsi que de nombreuses variantes d'agencement et de liaison des languettes élastiques avec la masse d'inertie 92 et le voile 34.

En variante, les pièces de liaison 100 et/ou 102 sont par exemple supprimées de manière que chacune des extrémités 96 et/ou 98 des moyens élastiques 94 soie(nt) reliée(s) directement à la masse d'inertie 92 et au voile 34, respectivement.

Selon une variante de réalisation simplifiée, chacun des N moyens élastiques 94 du batteur 90 est, par comparaison avec le premier mode de réalisation qui vient d'être décrit dans lequel les moyens élastiques 94 sont dédoublés, constitué d'un seul élément élastique 94 formé par un groupe comprenant un nombre « n » de languettes élastiques superposées les unes aux autres.

De préférence, le nombre « n » de languettes élastiques est compris entre 1 et 12, par exemple égal à 6 ou 8 selon les applications.

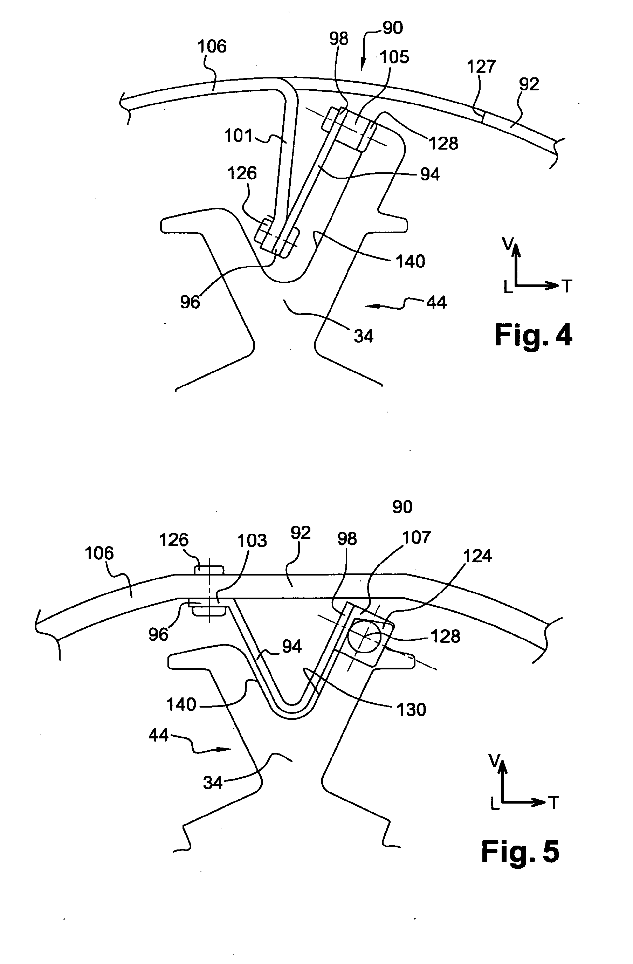

Selon les variantes représentées aux figures 4 et 5, les languettes élastiques 94 comportent une première extrémité 96 qui est liée directement à la masse d'inertie 92 et une deuxième extrémité 98 qui est liée, directement ou l'intermédiaire d'au moins une seconde pièce de liaison, au voile 34 de l'amortisseur 30.

Selon la variante représentée à la figure 4, les moyens élastiques 94 présentent, en coupe par un plan radial orthogonal à l'axe X-X globalement un profil plan en forme de «I» de sorte que les moyens élastiques 94 s'étendent radialement globalement de manière rectiligne entre chacune des extrémités 96 et 98 destinées à être reliées, directement ou non, à la masse d'inertie 92 et au voile 34.

Avantageusement, la première pièce de liaison 100 entre la masse d'inertie 92 et l'extrémité 96 des moyens élastiques 94 est supprimée et la masse d'inertie 92 comporte une partie de fixation, telle qu'une patte 101, qui est réalisée en une seule pièce, venue de matière, avec la partie axiale 106 de la masse 92 et qui est repliée radialement vers l'intérieur de manière à permettre une fixation directe de l'extrémité 96 des moyens élastiques 94.

Avantageusement, on réduit le nombre de moyens de fixation nécessaires pour relier les moyens élastiques à la masse 92, les premiers et seconds moyens de fixation 108 et 114 étant remplacés par des moyens de fixation 126.

Les moyens de fixation 126 sont de préférence constitués par des rivets et assurent la fixation directe de l'extrémité intérieure 96 des languettes 94 sur l'extrémité libre de la patte 101 solidaire de la masse 92.

La patte de fixation 101 est par exemple obtenue par découpe directement dans la partie axiale 106 de la masse 92 qui comporte dès lors une ouverture 127 qui, de manière analogue à l'ouverture 125 du premier mode, permet un accès depuis l'extérieur afin de réaliser des opérations de rivetage des pièces du batteur 90.

Avantageusement, l'autre extrémité extérieure 98 des moyens élastiques 94 est reliée directement au voile 34 qui comporte à cet effet une partie de fixation, telle qu'une patte axiale 105 obtenue par pliage du voile 34, de manière à permettre une fixation directe de l'extrémité 98 des moyens élastiques 94 sur le voile 34.

Avantageusement, on réduit encore le nombre de moyens de fixation nécessaires pour relier les moyens élastiques 94 au voile 34, les troisièmes et quatrièmes moyens de fixation 120 et 122 étant remplacés par des moyens de fixation 128, tels que des rivets.

Par comparaison avec le premier mode de réalisation, on réduit ainsi le nombre de pièces et d'opération de fixation en supprimant notamment la première et la seconde pièce de liaison 100 et 102 auparavant distinctes.

Dans la variante illustrée à la figure 4, la masse d'inertie 92 et le voile 34 comportent donc une partie de fixation 101 et 105 qui est réalisée en une seule pièce, venue de matière, avec la masse 92 et le voile 34 respectivement, pour permettre une fixation directe de chacune des extrémités 96, 98 des moyens élastiques 94.

En variante, les parties de fixation sont réalisées en une seule pièce, venues de matière, non pas avec la masse d'inertie 92 ou le voile 34 comme à la figure 4 mais avec les moyens élastiques 94 comme l'illustre par exemple en partie l'autre variante de réalisation de la figure 5 décrite ci-après.

En effet, selon la variante de la figure 5, l'extrémité 96 des languettes formant les moyens élastiques 94 est conformée pour permettre une fixation directe des moyens élastiques 94 avec la partie axiale 106 de la masse d'inertie 92 et/ou l'extrémité 98 des moyens élastiques 94 est conformée pour permettre une fixation directe des languettes formant les moyens élastiques 94 avec le voile 34.

Avantageusement, les moyens élastiques 94 comportent à l'une 96 et l'autre 98 de leurs extrémités une partie de fixation, telle que les pattes 103 ou 107, qui est réalisée en une seule pièce, venue de matière, avec les moyens élastiques 94.

Avantageusement, on réduit donc dans cette variante le nombre de moyens de fixation nécessaires pour relier les moyens élastiques 94 à la masse 92 et au voile 34, dès lors que les premiers et seconds moyens de fixation 108 et 114 sont remplacés par des moyens de fixation 126 et les troisièmes et quatrièmes moyens de fixation 120 et 122 sont remplacés par des moyens de fixation 128, lesdits moyens de fixation 126 et 128 étant de préférence des rivets.

Les languettes élastiques 94 illustrées à la figure 5 diffèrent de celles de la figure 4, en effet les languettes 94 sont pliées de manière à présenter, en coupe par un plan radial orthogonal à l'axe principal X-X, globalement un profil en forme « V » qui est ouvert radialement vers l'extérieur.

Avantageusement, le voile 34 comporte une partie qui, comprise entre deux fenêtres 44 consécutives dans lesquelles sont logées les organes élastiques 42 à action circonférentielle, s'étend radialement vers l'extérieur du voile 34.

Chacune des parties radiales du voile 34 comporte une encoche 130 présentant notamment une forme en V complémentaire de celle des languettes 94 de manière qu'au moins une partie des languettes élastiques 94 du batteur 90 soient reçues radialement et/ou axialement dans ladite encoche 130.

Avantageusement, on réalise un sous-ensemble compact qui, constitué de l'amortisseur 30 et du batteur 90, présente un encombrement total, tant radialement qu'axialement, globalement équivalent à l'encombrement général d'un dispositif d'amortissement 10 conventionnel dépourvu de batteur.

Dans les variantes des figures 4 et 5, les moyens élastiques 94 comportent N fois un unique élément élastique formé par un groupe comprenant un nombre n de languettes élastiques superposées les unes aux autres, le nombre n de languettes étant de préférence compris entre 1 et 12.

Comme cela a été illustré par les variantes des figures 4 et 5, la première pièce de liaison 100 de la masse d'inertie 92 avec la première extrémité 96 des moyens élastiques 94 et/ou la seconde pièce de liaison 102 du voile 34 de l'amortisseur 30 avec la deuxième extrémité 98 des moyens élastiques 94 sont réalisées en une seule pièce, venues de matière, avec les moyens élastiques 94 ou, respectivement, avec la masse d'inertie 92 ou le voile 34.

On décrira maintenant un deuxième mode de réalisation d'un batteur inertiel 90 dont les moyens élastiques 94 sont formés par au moins une languette conformément à l'invention.

De préférence, le batteur 90 comporte un nombre « N » de moyens élastiques 94 qui est égal à trois, les trois moyens élastiques 94 étant répartis circonférentiellement de manière régulière autour de l'axe X-X, soit à 120° les uns des autres.

Avantageusement, les moyens élastiques 94 sont constitués par au moins une languette 94, dite monobloc, qui est réalisée en une seule pièce, venue de matière, avec la masse d'inertie 92 du batteur 90.

Chaque languette monobloc 94 formant un des moyens élastiques est réalisée par découpe de la partie radiale 104 de la masse d'inertie 92.

Les languettes 94 s'étendent donc circonférentiellement de manière sensiblement curviligne et chaque languette monobloc 94 est comprise axialement dans l'épaisseur d'une partie radiale 104 de la masse d'inertie 92.

Les moyens élastiques 94 du batteur 90 formés par ladite au moins une languette monobloc présentent une première extrémité 132 solidaire de la masse 92 et une deuxième extrémité 134 libre qui est apte à être reliée directement au voile 34 de l'amortisseur 30 par l'intermédiaire d'un organe de fixation 136.

De préférence, les moyens élastiques 94 du batteur 90 formés par ladite au moins une languette monobloc s'étendent suivant un parcours sinueux présentant des circonvolutions ou des méandres entre l'extrémité 132 solidaire de la masse d'inertie 92 et l'extrémité 134 libre reliée au voile 34 par un rivet 136,

Avantageusement, l'extrémité 134 de la languette monobloc 94 comporte une partie de fixation 138 percée qui est apte à recevoir la tête avant du rivet de fixation 136.

Avantageusement, le batteur 90 comporte des moyens de butée 140 aptes à limiter au moins les débattements radiaux et/ou axiaux des moyens élastiques 94 par rapport à la masse d'inertie 92 et/ou au voile 34 de l'amortisseur 30.

Grâce à de tels moyens de butée 140, il est possible de limiter les efforts susceptibles de solliciter les moyens élastiques 94 afin de pas excéder certaines valeurs propres à détériorer ces derniers.

Dans le premier mode de réalisation, les moyens de butée 140 sont par exemple constitués par une face radiale interne 140 qui, adjacente aux moyens élastiques 94, est portée par la partie 110 de la première pièce de liaison 100, 100'.

Dans le deuxième mode de réalisation, les moyens de butée 140 sont par exemple formés par les faces axiales et/ou radiales qui, adjacentes à la languette monobloc 94, sont portées par la masse d'inertie 92.

Selon une variante non représentée, la masse d'inertie 92 du batteur 90 comporte des moyens, tels que des ailettes, qui s'étendant axialement en saillie à partir d'une face radiale avant 142 de la masse d'inertie 92 sont aptes à coopérer avec l'huile contenue dans le carter 14 de manière à obtenir une hystérésis supplémentaire donnée provoquée par l'amortissement hydraulique, notamment destiné à éviter que le batteur 90 n'entre en résonance.

Avantageusement, le système d'amortissement des vibrations formé par le batteur inertiel 90 est apte à permettre, par une adjonction ou par un retrait de matière opéré sur la masse d'inertie 92 et/ou la masse supplémentaire 93, une correction de balourds.

Le batteur 90 est en particulier apte à permettre une correction des balourds provoqués par les déséquilibres d'au moins l'un des éléments de l'appareil 12, notamment parmi le convertisseur 18, l'embrayage de verrouillage 20 ou l'amortisseur 30, lors de la mise en rotation.

Avantageusement, les moyens élastiques 94 du batteur 90 présentent, en fonctionnement, une hystérésis d'une valeur déterminée qui, très faible, est apte à éviter que le batteur 90 ne se bloque et n'assure plus sa fonction d'amortissement.

En effet, lorsque la valeur d'hystérésis des moyens élastiques 94 est nulle, le batteur 90 risque alors d'entrer lui-même en résonance et, en revanche, si la valeur d'hystérésis des moyens élastiques 94 est trop importante, le batteur 90 risque alors de se bloquer.

Or, si le batteur 90 se bloque en raison d'une valeur d'hystérésis excessive des moyens élastiques 94, le système d'amortissement ne se comporte plus comme un batteur inertiel mais comme un système d'amortissement à inertie rigide.

## Revendications

1. Dispositif d'amortissement (10), notamment pour un appareil d'accouplement hydrocinétique (12), comportant un amortisseur principal (30) qui comporte au moins des organes élastiques (42) à action circonférentielle interposés entre des rondelles de guidage (32A, 32B) et un voile (34) qui est lié en rotation aux rondelles de guidage (32A, 32B) avec une capacité de débattement angulaire limitée par des moyens de butée (38, 40), et comportant un système d'amortissement des vibrations (90), dit batteur inertiel, qui comporte au moins une masse d'inertie (92, 93) reliée au voile (34) de l'amortisseur (30) par des moyens élastiques (94), **caractérisé en ce que** les moyens élastiques (94) du batteur (90) sont constitués par au moins une languette élastique (94, 94') dont une extrémité (96, 96') est reliée à la masse d'inertie (92) et dont l'autre extrémité (98, 98') est reliée au voile (34) de l'amortisseur (30).

2. Dispositif d'amortissement (10) selon la revendication 1, **caractérisé en ce que** les moyens élastiques (94, 94') comportent une première extrémité (96, 96') qui est liée, directement ou par l'intermédiaire d'au moins une première pièce de liaison (100, 100'), à la masse d'inertie (92) et une deuxième extrémité (98, 98') qui est liée, directement ou par l'intermédiaire d'au moins une seconde pièce de liaison (102), au voile (34) de l'amortisseur (30).

3. Dispositif d'amortissement (10) selon l'une des revendications 1 ou 2, **caractérisé en ce que** au moins une extrémité (96, 98) des moyens élastiques (94) est conformée pour permettre une fixation directe des moyens élastiques (94) avec respectivement la masse d'inertie (92) ou le voile (34) de manière que les moyens élastiques (94) comportent à l'une et/ou l'autre de leurs extrémités (96, 98) une partie de fixation (103, 107) qui, venue de matière, est réalisée en une seule pièce.

4. Dispositif d'amortissement (10) selon la revendication 2, **caractérisé en ce que** la masse d'inertie (92) et/ou le voile (34) comportent une partie de fixation (101, 105) qui, venue de matière, est réalisée en une seule pièce avec la masse (92) ou le voile (34) de manière à permettre une fixation directe de l'une des extrémités (96, 98) des moyens élastiques (94).

5. Dispositif d'amortissement (10) selon l'une quelconque des revendications précédentes, **caractérisé en ce que** les moyens élastiques (94, 94') comportent au moins un élément élastique (94, 94') formé par un groupe comprenant un nombre (n) de languettes élastiques superposées les unes aux autres, le nombre (n) de languettes étant de préférence compris entre 1 et 12.

6. Dispositif d'amortissement (10) selon la revendication 5, **caractérisé en ce que** les moyens élastiques (94, 94') comportent un nombre (N) d'éléments élastiques qui, au moins égal à deux, sont répartis circonférentiellement de manière régulière par rapport à la masse d'inertie (92) et au voile (34) de l'amortisseur (30).

7. Dispositif d'amortissement (10) selon l'une quelconque des revendications 1 à 5, **caractérisé en ce que** les moyens élastiques (94) comportent au moins un élément élastique (94) formé par au moins une languette, dite monobloc, qui est réalisée en une seule pièce, venue de matière, avec la masse d'inertie (92) du batteur (90).

8. Dispositif d'amortissement (10) selon la revendication 7, **caractérisé en ce que** chaque languette monobloc (94) est réalisée par découpe de la masse d'inertie (92) et **en ce que** chaque languette monobloc (94) s'étend circonférentiellement en étant comprise axialement et radialement dans l'épaisseur de la masse d'inertie (92).

9. Dispositif d'amortissement (10) selon l'une quelconque des revendications précédentes, **caractérisé en ce que** le batteur (90) comporte des moyens de butée (140) aptes à limiter axialement et/ou radialement les débattements des moyens élastiques (94, 94') par rapport à la masse d'inertie (92) et/ou au voile (34).

10. Dispositif d'amortissement (10) selon l'une quelconque des revendications précédentes, **caractérisé en ce que** le système d'amortissement des vibrations formé par le batteur inertiel (90) est apte à permettre une correction des balourds par une adjonction ou par un retrait de matière opéré localement sur la masse d'inertie (92, 93).

## Claims

1. Damping device (10), in particular for a hydrokinetic coupling mechanism (12), comprising a main damper (30) which comprises at least resilient units (42) with circumferential action, which are interposed between guide washers (32A, 32B) and a body (34) which is connected in rotation to the guide washers (32A, 32B), with an angular clearance capacity which is limited by stop means (38, 40), and comprising a system (90) for damping of vibrations, known as an inertia damper, which comprises at least one inertia mass (92, 93) which is connected to the body (34) of the damper (30) by resilient means (94), **characterised in that** the resilient means (94) of the damper (90) are constituted by at least one resilient tongue (94, 94'), one end of which (96, 96') is connected to the inertia mass (92), and the other end (98, 98') of which is connected to the body (34) of the damper (30).

2. Damping device (10) according to claim 1, **characterised in that** the resilient means (94, 94') comprise a first end (96, 96') which is connected directly, or by means of at least a first connection part (100, 100'), to the inertia mass (92), and a second end (98, 98') which is connected directly, or by means of at least a second connection part (102), to the body (34) of the damper (30).

3. Damping device (10) according to one of claims 1 or 2, **characterised in that** at least one end (96, 98) of the resilient means (94) is formed in order to permit direct securing of the resilient means (94), respectively to the inertia mass (92) or the body (34), such that the resilient means (94) comprise at one and/or the other of their ends (96, 98) a securing part (103, 107) which is integral and is produced in a single piece.

4. Damping device (10) according to claim 2, **characterised in that** the inertia mass (92) and/or the body (34) comprise a securing part (101, 105) which is produced in a single piece and is integral with the mass (92) or the body (34), such as to permit direct securing of one of the ends (96, 98) of the resilient means (94).

5. Damping device (10) according to any one of the preceding claims, **characterised in that** the resilient means (94, 94') comprise at least one resilient element (94, 94') which is formed by a group comprising a number (n) of resilient tongues which are superimposed on one another, the number (n) of tongues preferably being between 1 and 12.

6. Damping device (10) according to claim 5, **characterised in that** the resilient means (94, 94') comprise a number (N) of resilient elements, of which there are at least two, and which are distributed circumferentially, regularly relative to the inertia mass (92) and the body (34) of the damper (30).

7. Damping device (10) according any one of claims 1 to 5, **characterised in that** the resilient means (94) comprise at least one resilient element (94) which is formed by at least one tongue, and is so-called monobloc, i.e. which is made in a single piece, and is integral with the inertia mass (92) of the damper (90).

8. Damping device (10) according to claim 7, **characterised in that** each monobloc tongue (94) is produced by cutting-out of the inertia mass (92), and **in that** each monobloc tongue (94) extends circumferentially, whilst being contained axially and radially in the thickness of the inertia mass (92).

9. Damping device (10) according to any one of the preceding claims, **characterised in that** the damper (90) comprises stop means (140) which can limit axially and/or radially the clearance of the resilient means (94, 94') relative to the inertia mass (92) and/or the body (34).

10. Damping device (10) according to any one of the preceding claims, **characterised in that** the system for damping of the vibrations formed by the inertia damper (90) can permit correction of the unbalance by means of addition or removal of material, which is implemented locally on the inertia mass (92, 93).

## Patentansprüche

1. Dämpfungsvorrichtung (10), insbesondere für eine hydrodynamische Kupplungseinrichtung (12), umfassend einen Hauptdämpfer (30), welcher zumindest in Umfangsrichtung wirksame elastische Organe (42), die zwischen Führungsscheiben (32A, 32B) eingesetzt sind, und einen Flansch (34), der rotatorisch mit den Führungsscheiben (32A, 32B) mit der Möglichkeit einer durch Anschlagmittel (38, 40) begrenzten Winkelauslenkung verbunden ist, aufweist, und umfassend ein als Trägheitstrommel bezeichnetes Vibrations-Dämpfungssystem (90), welches zumindest eine Trägheitsmasse (92, 93) aufweist, die mit dem Flansch (34) des Dämpfers (30) durch elastische Mittel (94) verbunden ist, **dadurch gekennzeichnet, dass** die elastischen Mittel (94) der Trommel (90) durch mindestens eine elastische Zunge (94, 94') gebildet sind, deren eines Ende (96, 96') mit der Trägheitsmasse (92) und deren anderes Ende (98, 98') mit dem Flansch (34) des Dämpfers (30) verbunden ist.

2. Dämpfungsvorrichtung (10) nach Anspruch 1, **dadurch gekennzeichnet, dass** die elastischen Mittel (94, 94') ein erste Ende (96, 96'), welches unmittelbar oder unter Vermittlung von mindestens einem ersten Verbindungsstück (100, 100') mit der Trägheitsmasse (92) verbunden ist, und ein zweites Ende (98, 98'), welches unmittelbar oder unter Vermittlung von mindestens einem zweiten Verbindungsstück (102) mit dem Flansch (34) des Dämpfers (30) verbunden ist, aufweisen.

3. Dämpfungsvorrichtung (10) nach Anspruch 1 oder 2, **dadurch gekennzeichnet, dass** mindestens ein Ende (96, 98) der elastischen Mittel (94) dazu angepasst ist, eine direkte Befestigung der elastischen Mittel (94) an der Trägheitsmasse (92) beziehungsweise an dem Flansch (34) in der Art zu erlauben, dass die elastischen Mittel (94) an dem einen und/oder anderen ihrer Enden (96, 98) einen Befestigungsteil (103, 107) aufweisen, der einstückig ausgeführt ist.

4. Dämpfungsvorrichtung (10) nach Anspruch 2, **dadurch gekennzeichnet, dass** die Trägheitsmasse (92) und/oder der Flansch (34) einen Befestigungsteil (101, 105) aufweisen, der einstückig mit der Trägheitsmasse (92) oder dem Flansch (34) ausgeführt ist, um eine direkte Befestigung von einem der Enden (96, 98) der elastischen Mittel (94) zu erlauben.

5. Dämpfungsvorrichtung (10) nach einem der vorhergehenden Ansprüche, **dadurch gekennzeichnet, dass** die elastischen Mittel (94, 94') mindestens ein elastisches Element (94, 94') aufweisen, welches aus einer eine Anzahl (n) von einander überlagernden elastischen Zungen umfassenden Gruppe gebildet ist, wobei die Anzahl (n) der Zungen vorzugsweise zwischen 1 und 12 liegt.

6. Dämpfungsvorrichtung (10) nach Anspruch 5, **dadurch gekennzeichnet, dass** die elastischen Mittel (94, 94') eine Anzahl (N), die zumindest gleich zwei ist, von elastischen Elementen umfassen, welche relativ zur Trägheitsmasse (92) und zum Flansch (34) gleichmäßig über den Umfang verteilt sind.

7. Dämpfungsvorrichtung (10) nach einem der Ansprüche 1 bis 5, **dadurch gekennzeichnet, dass** die elastischen Mittel (94) zumindest ein elastisches Element (94) aufweisen, welches durch mindestens eine als Monoblock bezeichnete Zunge gebildet ist, die einstückig mit der Trägheitsmasse (92) der Trommel (90) ausgeführt ist.

8. Dämpfungsvorrichtung (10) nach Anspruch 7, **dadurch gekennzeichnet, dass** jede Monoblock-Zunge (94) durch Ausstanzen aus der Trägheitsmasse (92) ausgeführt ist, und dass sich jede Monoblock-Zunge (94) in Umfangsrichtung erstreckt, wobei sie axial und radial in der Dicke der Trägheitsmasse (92) enthalten ist.

9. Dämpfungsvorrichtung (10) nach einem der vorhergehenden Ansprüche, **dadurch gekennzeichnet, dass** die Trommel (90) Anschlagmittel (140) umfasst, die dazu geeignet sind, die Auslenkungen der elastischen Mittel (94, 94') relativ zur Trägheitsmasse (92) und/oder zum Flansch (34) axial und/oder radial zu begrenzen.

10. Dämpfungsvorrichtung (10) nach einem der vorhergehenden Ansprüche, **dadurch gekennzeichnet, dass** das durch die Trägheitstrommel (90) gebildete Vibrations-Dämpfungssystem dazu geeignet ist, eine Korrektur der Unwuchten durch eine Hinzufügung oder durch eine lokal an der Trägheitsmasse (92, 93) ausgeführte Materialabhebung zu erlauben.
